# EUROPÄISCHE PATENTANMELDUNG

(11) **EP 1 788 807 A2**
(43) Veröffentlichungstag der Anmeldung: **23.05.2007**
(21) Anmeldenummer: 06124565.0
(22) Anmeldetag: 22.11.2006
(51) Int. Cl.: H04N 5/782

(54) **Fernsehprogrammaufzeichnungsgerät**

(30) Priorität: 22.11.2005 DE 102005056399
(71) Anmelder: Gattermeyer, Wolfgang, 65182 Bad Soden (DE)
(72) Erfinder: Wik, Vladimar, 75004 Paris (FR); Zier, Thomas, Livermore, 94550 (US); Müller-Loeffelholz, Georg, 10407 Berlin (DE)
(74) Vertreter: Eisenführ, Speiser & Partner

(57) **Zusammenfassung**

Vorrichtung zum ferngesteuerten Aufzeichnen von Fernsehprogrammen mit einem Empfänger (10) für das Empfangen eines Fernsehsignals, insbesondere eines digitalen Fernsehsignals, und zum Auswählen eines als Teil des Fernsehsignals übertragenen Fernsehkanals auf ein Kanalauswahlsignal hin, einer mit dem Empfänger verbundenen Dekodiereinheit (20) für das Dekodieren des von dem Empfänger (10) empfangenen und ausgewählten Fernsehkanals, einem mit dem Empfänger (10) und der Dekodiereinheit (20) verbundenen Aufzeichnungsspeicher (30) für das Aufzeichnen des Fernsehkanals auf ein Aufzeichnungsstartsignal hin und für das Wiedergeben des aufgezeichneten Fernsehkanals an die Dekodiereinheit (20) auf ein Wiedergabestartsignal hin, einem mit der Dekodiereinheit (20) verbundenen Bildsignalgenerator (40) für das Erzeugen eines durch ein Anzeigegerät, insbesondere durch einen Bildschirm (3) oder einen Fernseher, anzeigbaren Bildsignals, einer Schnittstelle (60) für das Senden von mit einer Adressinformation versehenen Datenpaketen über ein Datennetz (4), insbesondere über das Internet, einem mit dem Bildsignalgenerator (40) und der Schnittstelle (60) verbundenen Programmführergenerator (50) zum Erstellen von Aufzeichnungsaufträgen auf ein Benutzereingabesignal hin, sowie einer mit dem Empfänger (10), dem Aufzeichnungsspeicher (30), dem Programmführergenerator (50) und der Schnittstelle (60) verbundenen Steuereinheit (70), die über eine Benutzerschnittstelleneinheit (80) verfügt und ausgebildet ist, über die Benutzerschnittstelleneinheit (80) eine Benutzereingabe zu empfangen und gemäß der Benutzereingabe das Kanalauswahlsignal zu erzeugen und an den Empfänger (10) zu geben, das Wiedergabestartsignal zu erzeugen und an den Aufzeichnungsspeicher (30) zu geben und das Benutzereingabesignal zu erzeugen und an den Programmführergenerator (50) zu geben, wobei der Programmführergenerator (50) ausgebildet ist, einen erstellten Aufzeichnungsauftrag als Datenpaket an die Schnittstelle (60) für das Senden über das Datennetz zu geben.

## Beschreibung

Die Erfindung betrifft eine Vorrichtung und ein System zum ferngesteuerten Aufzeichnen von Fernsehprogrammen. Die Vorrichtung verfügt über einen Empfänger für das Empfangen eines Fernsehsignals und zum Auswählen eines als Teil des Fernsehsignals übertragenen Fernsehkanals, eine mit dem Empfänger verbundene Dekodiereinheit für das Dekodieren des von dem Empfänger empfangenen und ausgewählten Fernsehkanals, einen mit Empfänger und Dekodiereinheit verbundenen Aufzeichnungsspeicher für das Aufzeichnen des Fernsehkanals und für das Wiedergeben des aufgezeichneten Fernsehkanals an die Dekodiereinheit, einen mit der Dekodiereinheit verbundenen Bildsignalgenerator für das Erzeugen eines durch ein Anzeigegerät anzeigbaren Bildsignals, eine Schnittstelle für das Senden von mit einer Adressinformation versehenen Datenpaketen über ein Datennetz, einen mit dem Bildsignalgenerator und der Schnittstelle verbundenen Programmführergenerator zum Erstellen von Aufzeichnungsaufträgen und eine mit Empfänger, Aufzeichnungsspeicher, Programmführergenerator und Schnittstelle verbundene Steuereinheit, die über eine Benutzerschnittstelleneinheit verfügt und ausgebildet ist, über die Benutzerschnittstelleneinheit eine Benutzereingabe zu empfangen und gemäß der Benutzereingabe Steuersignale für den Empfänger, den Aufzeichnungsspeicher oder den Programmführergenerator zu erzeugen und an diese auszugeben.

Solche Vorrichtungen sind prinzipiell, insbesondere als sogenannte Set-Top-Boxen, bekannt. Der Aufzeichnungsspeicher wird bei bekannten Geräten gewöhnlich als Festplatte ausgeführt, die die als gewöhnlich digitales Fernsehsignal empfangenen Bild- und Tondaten eines Fernsehsignals aufzeichnen und zu einem späteren Zeitpunkt oder zeitversetzt noch während der Aufzeichnung wiedergeben kann. Der Empfänger empfängt dabei das digitale Fernsehsignal und wählt nach Benutzervorgabe (bzw. nach Vorgabe der Steuereinheit) einen Kanal der in dem Fernsehsignal übertragenen Fernsehkanäle aus. Dieser ausgewählte Fernsehkanal kann an die Dekodiereinheit zum Dekodieren der digital abgelegten Bild- und Tondaten oder an den Aufzeichnungsspeicher zur Speicherung auf diesem gegeben werden.

Bei der Wiedergabe wird das auf dem Aufzeichnungsspeicher gespeicherte digitale Bild- und Tonsignal an die Dekodiereinheit zur Dekodierung und das dekodierte Bild- und Tonsignal von dieser weiter an den Bildsignalgenerator gegeben. Der Bildsignalgenerator erzeugt ein Bildsignal, das von einem Bildschirm, einem Fernseher oder einem sonstigen Anzeigegerät angezeigt werden kann.

Um ein Benutzerinterface für das Programmieren der Aufzeichnungsfunktion zur Verfügung zu stellen, wird ein Programmführergenerator vorgesehen, der unter anderem mit dem Fernsehsignal zusammen empfangene Programminformationen zur Anzeige bringen kann und einem Benutzer die Möglichkeit gibt, eine aufzuzeichnende Fernsehsendung bzw. einen Fernsehkanal und eine Uhrzeit einer durchzuführenden Aufzeichnung vorzugeben.

Die im Stand der Technik bekannten Vorrichtungen gemäß dem Oberbegriff des Anspruchs 1 verfügen über eine Schnittstelle für das Senden und Empfangen von mit einer Adresseninformation versehenen Datenpaketen über ein Datennetz, insbesondere über das Internet. Diese Schnittstelle ist gewöhnlich dazu vorgesehen, Datenpakete zu empfangen, die eine Aufnahmeinformation enthalten, die das Aufzeichnungsverhalten der Vorrichtung beeinflussen können. So gibt es Dienstleister, die den exakten Zeitpunkt des Ausstrahlungsbeginns und des Beginns und Endes von unerwünschten Werbeblöcken von Fernsehprogrammen über das Internet versenden, so dass die von einem Benutzer einer Vorrichtung programmierte Aufzeichnung einer Fernsehsendung auf einem Fernsehkanal an den entsprechenden Stellen unterbrochen werden kann. Auch ist es möglich, dass die Informationen über Beginn und Ende von unerwünschten Werbepausen erst zu einem späteren Zeitpunkt an die Vorrichtung übertragen werden, woraufhin die Vorrichtung bei einer von einem Benutzer gewünschten Wiedergabe des aufgezeichneten Bild- und Tonsignals automatisch die mit aufgezeichneten unerwünschten Werbeblöcke überspringt.

Nachteilig an diesen im Stand der Technik bekannten Vorrichtungen ist, dass eine verhältnismäßig komplizierte Steuerung für die Verwaltung von durch einen Benutzer erstellten Aufzeichnungsaufträgen und für die Steuerung der Aufzeichnung und Wiedergabe vorgesehen werden muss, um die Aufzeichnung von Fernsehsendungen zu steuern und gleichzeitig auf die über die Schnittstelle empfangene Programminformationen zu reagieren.

Dieser Mangel des Standes der Technik wird durch eine Vorrichtung gelöst, bei der der Programmführergenerator ausgebildet ist, einen durch einen Benutzer erstellten Aufzeichnungsauftrag als Datenpaket an die Schnittstelle für das Senden über das Datennetz zu geben. Die Vorrichtung besitzt damit keinerlei eigene Verwaltung für erstellte Aufzeichnungsaufträge, sondern überträgt diese an einen Aufzeichnungsauftragsserver, der der Vorrichtung den Beginn einer aufzuzeichnenden Sendung entweder durch Senden eines Aufzeichnungsauftrages über das Datennetz oder durch einen zusammen mit dem ausgestrahlten Fernsehsignal ausgestrahlten Aufzeichnungsauftrag signalisiert. Der Aufzeichnungsauftragsserver kann dabei auch beispielsweise zusätzlich über einen Internetzugang oder durch Verschicken einer Textnachricht von einem Mobiltelefon programmierbar ausgeführt sein.

Der wesentliche Vorteil der erfindungsgemäßen Vorrichtung liegt darin, auf Komponenten wie eine Uhr und eine komplexe Steuerung des Aufzeichnungsverhaltens der Vorrichtung verzichten zu können. Die Erfindung ermöglicht damit die Herstellung preiswerterer Vorrichtungen mit derselben Funktionalität wie die im Stand der Technik bekannten.

Bei einer Ausführung der erfindungsgemäßen Vorrichtung ist die Schnittstelle mit der Steuereinheit der Vorrichtung verbunden und ausgebildet, einen Aufzeichnungsauftrag als Datenpaket über das Datennetz zu empfangen und an die Steuereinheit zu geben. Die Steuereinheit ist dabei dazu ausgebildet, auf den Empfang eines Aufzeichnungsauftrages hin das Aufzeichnungsstartsignal an den Aufzeichnungsspeicher zu geben. Der Aufzeichnungsspeicher ist ausgebildet, auf den Empfang des Aufzeichnungsstartsignales das Aufzeichnen des von dem Empfänger ausgewählten Fernsehkanales zu beginnen. Die Steuereinheit signalisiert auf den Empfang eines Aufzeichnungsauftrages dem Empfänger durch ein Kanalauswahlsignal denjenigen Fernsehkanal, der aus dem empfangenen Fernsehsignal ausgewählt und an den Aufzeichnungsspeicher gegeben werden soll.

Um einen besonders einfachen Aufbau der erfindungsgemäßen Vorrichtung zu erreichen, ist bei einer Ausführungsvariante die Steuereinheit ausgebildet, einen Aufzeichnungsauftrag ausschließlich von der Schnittstelle entgegenzunehmen.

Bei einer anderen Ausführung der Vorrichtung ist der Empfänger ausgebildet, als Teil des empfangenen Fernsehsignals übertragene Zusatzinformationen an die Dekodiereinheit zu geben, die mit der Steuereinheit verbunden und ausgebildet ist, einen als Teil der Zusatzinformationen übertragenen Aufzeichnungsauftrag zu empfangen und an die Steuereinheit zu geben. Die Steuereinheit ist dabei ausgebildet, auf den Empfang des Aufzeichnungsauftrages anzusprechen und das Aufzeichnungsstartsignal zu erzeugen und an den Aufzeichnungsspeicher zu geben. Außerdem erzeugt die Steuereinheit gemäß dem empfangenen Aufzeichnungsauftrag ein Kanalauswahlsignal für den Empfänger.

Wiederum kann eine besonders vereinfachte Ausführung der Vorrichtung vorgesehen sein, bei der die Steuereinheit ausgebildet ist, allein von der Dekodiereinheit einen Aufzeichnungsauftrag entgegenzunehmen.

Ebenso ist eine Ausführungsvariante vorgesehen, bei der die Steuereinheit ausgebildet ist, einen Aufzeichnungsauftrag ausschließlich von Dekodiereinheit und Schnittstelle entgegenzunehmen.

Die Vorrichtung kann auch einen mit dem Bildsignalgenerator verbundenen Bildschirm aufweisen, der ausgebildet ist, das von dem Bildsignalgenerator erzeugte Bildsignal darzustellen. Diese Ausführungsvariante bietet den Vorteil, dass die Funktionalität zweier normalerweise getrennt vorzufindender Geräte, eines Fernsehers und einer Set-Top-Box, in einer Vorrichtung zusammengefasst wird.

Ein zweiter Aspekt der Erfindung betrifft ein System, das eine erfindungsgemäße Vorrichtung und einen mit der Vorrichtung über ein Datennetz verbundenen oder verbindbaren Aufzeichnungsauftragsserver umfasst. Der Aufzeichnungsauftragsserver ist dabei ausgebildet, über das Datennetz einen ersten Aufzeichnungsauftrag von der Vorrichtung entgegenzunehmen und zu einem durch den ersten Aufzeichnungsauftrag bezeichneten Zeitpunkt einen zweiten Aufzeichnungsauftrag an die Vorrichtung zu senden. Der erste Aufzeichnungsauftrag und der zweite Aufzeichnungsauftrag enthalten dabei die gleiche Information zu dem aufzuzeichnenden Fernsehkanal. Der erste Aufzeichnungsauftrag enthält außerdem eine Information über den Zeitpunkt einer aufzuzeichnenden Fernsehsendung oder zu der aufzuzeichnenden Fernsehsendung, die eine Bestimmung des geplanten Aufzeichnungsbeginns der Fernsehsendung durch die Vorrichtung erlaubt.

Bei einer Variante des Systems ist der Aufzeichnungsauftragsserver ausgebildet, den zweiten Aufzeichnungsauftrag über das Datennetz an die Vorrichtung zu senden. Alternativ oder zusätzlich kann der Aufzeichnungsauftragsserver ausgebildet sein, den zweiten Aufzeichnungsauftrag als Teil der mit dem Fernsehsignal zusammen übertragenen Zusatzinformationen in ein Fernsehsignal einzuspeisen oder an ein Gateway für das Einspeisen in ein Fernsehsignal zu senden.

Indem der Aufzeichnungsauftragsserver die von einem Benutzer mittels der Vorrichtung oder einer anderen Methode erstellten Aufzeichnungsaufträge zentral verwaltet, kann ein System zur Verfügung gestellt werden, dass die Programmierung der Aufzeichnung von Fernsehsendungen auf vielfältige Weise am Ort der Vorrichtung oder fern von dieser erlaubt. Weil die Vorrichtung keinen lokalen Speicher für lokal erstellte Aufzeichnungsaufträge aufweist, können Konflikte zwischen mehreren Aufzeichnungsaufträgen zentral erkannt und gegebenenfalls nach Benachrichtigung des Benutzers, aufgelöst werden. Die gegenüber dem Stand der Technik vereinfachte erfindungsgemäße Vorrichtung ermöglicht somit als weiteren Vorteil ein System, durch das ein Benutzer auf verschiedene Weisen die Aufzeichnung einer Fernsehsendung programmieren kann, ohne dass es zu unerkannten Konflikten zwischen lokal und auf anderen Wegen programmierten Aufzeichnungsaufträgen kommen kann.

Die Erfindung wird im Folgenden anhand einer Abbildung einer Ausführungsbeispieles näher beschrieben. Es zeigt:

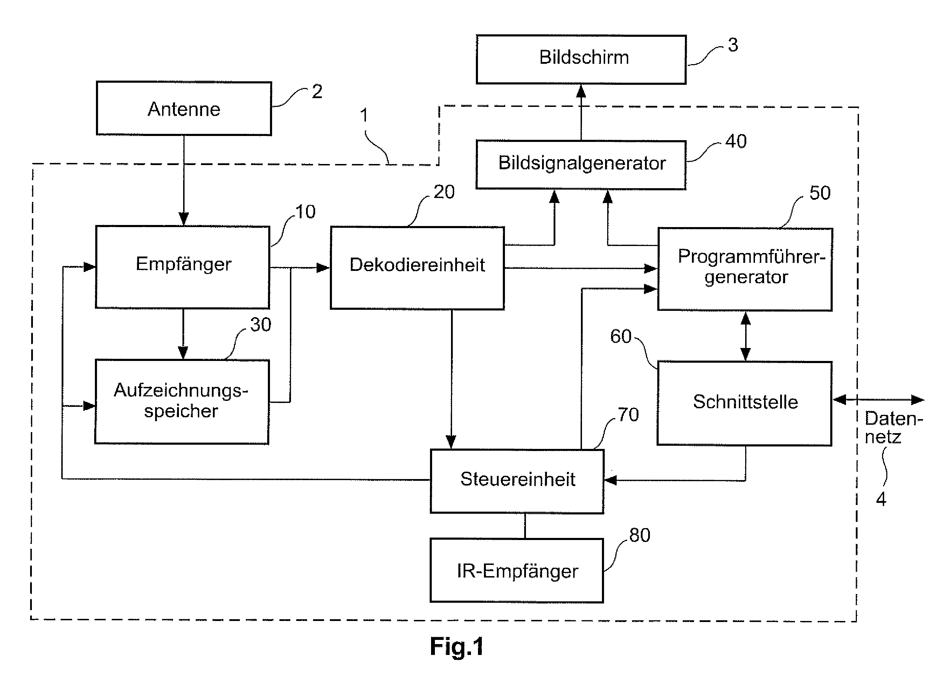

- Figur 1: eine Ausführungsvariante der erfindungsgemäßen Vorrichtung als Blockdiagramm.

Die Vorrichtung 1 ist einerseits mit einer Antenne 2, andererseits mit einem Bildschirm 3 verbunden. Die Antenne 2 dient zum Empfang eines durch Funksignal übertragenen Fernsehsignals; an ihrer Stelle kann beispielsweise auch ein Satellitenempfänger oder ein Kabelanschluss vorgesehen werden. Der Bildschirm 3 kann ein Fernsehgerät sein und dient zur Darstellung des von der Vorrichtung 1 erzeugten und ausgegebenen Bildsignals. Die Antenne 2 ist mit dem Empfänger 10 der Vorrichtung 1 verbunden, der das von der Antenne empfangene Funksignal empfängt und demoduliert. Außerdem ist der Empfänger 10 ausgebildet, aus dem demodulierten Fernsehsignal einen durch ein Kanalauswahlsignal bestimmten Fernsehkanal auszuwählen und den ausgewählten Fernsehkanal, ggf. zusammen mit zusammen mit dem Fernsehsignal übertragenen Zusatzinformationen, an eine mit dem Empfänger 10 verbundene Dekodiereinheit 20 zu geben. Die Dekodiereinheit 20 setzt den durch eines der bekannten Bild- und Tonkodierungsverfahren wie MPEG2 oder MPEG4 kodierten digitalen Datenstrom in ein Bild- und Tonsignal um, das an den Bildsignalgenerator 40 gegeben wird. Der Bildsignalgenerator 40 erzeugt aus den von der Dekodiereinheit 20 erhaltenen Bild- und Tonsignalen ein Bild- und Tonsignal, das durch den angeschlossenen Bildschirm anzeigbar bzw. ausgebbar ist. Die Dekodiereinheit 20 ist außerdem mit einem Programmführergenerator 50 verbunden, der von der Dekodiereinheit 20 als Zusatzinformationen empfangene Programminformationen empfängt und auf eine entsprechende Benutzereingabe hin einem Benutzer zugänglich macht. Dazu erzeugt der Programmführergenerator 50 ein digitales Bildsignal und an gibt dieses an den Bildsignalgenerator 40 aus, der wiederum das von dem Programmführergenerator 50 erhaltene digitale Bildsignal mit den Programminformationen auf dem Bildschirm 3 zur Anzeige bringt.

Die Dekodiereinheit 20 ist in der abgebildeten Ausführungsvariante außerdem mit einer Steuereinheit 70 verbunden, die ausgebildet ist, von der Dekodiereinheit 20 als Teil des empfangenen Fernsehsignals übertragene Zusatzinformationen entgegenzunehmen. Die Steuereinheit detektiert in den Zusatzinformationen enthaltene Aufzeichnungsaufträge und spricht auf einen Aufzeichnungsauftrag, der an die Vorrichtung 1 gerichtet ist, an und gibt ein Aufzeichnungsstartsignal an den Aufzeichnungsspeicher 30 und ein durch den Inhalt des Aufzeichnungsauftrages vorgegebenes Kanalauswahlsignal an den Empfänger 10 aus. Durch Ausgabe des Kanalauswahlsignales wird der Empfänger angewiesen, den von einem Benutzer gewünschten Kanal einzustellen, und durch das Aufzeichnungsstartsignal wird der Aufzeichnungsspeicher veranlasst, den von dem Empfänger 10 ausgegebenen Fernsehkanal aufzuzeichnen. Die Steuereinheit 70 ist außerdem mit einer Benutzerschnittstelleneinheit 80 verbunden, die im abgebildeten Beispiel als Infrarotempfänger 80 für eine Infrarotfernbedienung verwirklicht ist. Alternativ oder zusätzlich können auch ein Funkempfänger für eine Funkfernbedienung oder Tasten- oder Sensorknöpfe an der Vorrichtung 1 selbst vorgesehen werden.

Ein Benutzer kann über eine nicht in Figur 1 abgebildete Infrarotfernbedienung Kommandos an den IR-Empfänger 80 senden, der diese an die Steuereinheit 70 weitergibt. Je nach Benutzereingabe erzeugt die Steuereinheit 70 Steuersignale für den Empfänger 10 - etwa weil der Benutzer die Anzeige eines bestimmten Fernsehkanals auf dem Bildschirm 3 wünscht - oder für den Programmführergenerator 50, weil der Benutzer sich über das Fernsehprogramm informieren oder Aufzeichnungsaufträge erstellen möchte.

Die Vorrichtung 1 ist drahtlos oder über eine Funkverbindung mit einem Datennetz 4 verbunden. Für die Kommunikation über das Datennetz 4 ist bei der Vorrichtung 1 eine Schnittstelle 60 vorgesehen, die ausgebildet ist, mit einer Adressinformation versehene Datenpakete über das Datennetz 4 zu versenden und zu empfangen. Die Schnittstelle 60 ist mit dem Programmführergenerator 50 verbunden und erhält von dem Programmführergenerator 50 von einem Benutzer erstellte Aufzeichnungsaufträge zum Versand in einem Datenpaket an einen Aufzeichnungsauftragsserver. Die Schnittstelle 60 ist außerdem ausgebildet, über das Datennetz 4 in einem Datenpaket übersandte Aufzeichnungsaufträge entgegenzunehmen und an die Steuereinheit 70 zu geben, die auf den Erhalt eines Aufzeichnungsauftrages hin ein Kanalauswahlsignal für den Empfänger 10 und eine Aufzeichnungsstartsignal für den Aufzeichnungsspeicher 30 erzeugt.

Ein Aufzeichnungsauftrag kann auch eine Aufzeichnungsstop-Information enthalten, auf deren Empfang hin die Steuereinheit 70 die Erzeugung und das Ausgeben des Aufzeichnungsstartsignals einstellt bzw. ein Aufzeichnungsstopsignal an den Aufzeichnungsspeicher 30 ausgibt, woraufhin dieser die Aufzeichnung des von dem Empfänger 10 ausgewählten Fernsehkanals einstellt.

## Patentansprüche

1. Vorrichtung (1) zum ferngesteuerten Aufzeichnen von Fernsehprogrammen mit
einem Empfänger (10) für das Empfangen eines Fernsehsignals, insbesondere eines digitalen Fernsehsignals, und zum Auswählen eines als Teil des Fernsehsignals übertragenen Fernsehkanals auf ein Kanalauswahlsignal hin,
einer mit dem Empfänger (10) verbundenen Dekodiereinheit (20) für das Dekodieren des von dem Empfänger (10) empfangenen und ausgewählten Fernsehkanals,
einem mit dem Empfänger (10) und der Dekodiereinheit (20) verbundenen Aufzeichnungsspeicher (30) für das Aufzeichnen des Fernsehkanals auf ein Aufzeichnungsstartsignal hin und für das Wiedergeben des aufgezeichneten Fernsehkanals an die Dekodiereinheit (20) auf ein Wiedergabestartsignal hin,
einem mit der Dekodiereinheit (20) verbundenen Bildsignalgenerator (40) für das Erzeugen eines durch ein Anzeigegerät, insbesondere durch einen Bildschirm (3) oder einen Fernseher, anzeigbaren Bildsignals,
einer Schnittstelle (60) für das Senden von mit einer Adressinformation versehenen Datenpaketen über ein Datennetz (4), insbesondere über das Internet,
einem mit dem Bildsignalgenerator (40) und der Schnittstelle (60) verbundenen Programmführergenerator (50) zum Erstellen von Aufzeichnungsaufträgen auf ein Benutzereingabesignal hin,
sowie einer mit dem Empfänger (10), dem Aufzeichnungsspeicher (30), dem Programmführergenerator (50) und der Schnittstelle (60) verbundenen Steuereinheit (70), die über eine Benutzerschnittstelleneinheit (80) verfügt und ausgebildet ist, über die Benutzerschnittstelleneinheit (80) eine Benutzereingabe zu empfangen und gemäß der Benutzereingabe das Kanalauswahlsignal zu erzeugen und an den Empfänger (10) zu geben, das Wiedergabestartsignal zu erzeugen und an den Aufzeichnungsspeicher (30) zu geben und das Benutzereingabesignal zu erzeugen und an den Programmführergenerator (50) zu geben,
**dadurch gekennzeichnet,**
**dass** der Programmführergenerator (50) ausgebildet ist, einen erstellten Aufzeichnungsauftrag als Datenpaket an die Schnittstelle (60) für das Senden über das Datennetz (4) zu geben.

2. Vorrichtung (1) nach Anspruch 1, **dadurch gekennzeichnet, dass** die Schnittstelle (60) mit der Steuereinheit (70) verbunden und ausgebildet ist, einen Aufzeichnungsauftrag als Datenpaket über das Datennetz (4) zu empfangen und an die Steuereinheit (70) zu geben, und dass die Steuereinheit (70) ausgebildet ist, auf den Empfang eines Aufzeichnungsauftrages hin das Aufzeichnungsstartsignal zu erzeugen und an den Aufzeichnungsspeicher (30) zu geben und das Kanalauswahlsignal zu erzeugen und an den Empfänger (10) zu geben.

3. Vorrichtung (1) nach Anspruch 2, **dadurch gekennzeichnet, dass** die Steuereinheit (70) ausgebildet ist, einen Aufzeichnungsauftrag ausschließlich von der Schnittstelle (60) entgegenzunehmen.

4. Vorrichtung (1) nach Anspruch 1, **dadurch gekennzeichnet, dass** der Empfänger (10) ausgebildet ist, als Teil des empfangenen Fernsehsignals übertragene Zusatzinformationen an die Dekodiereinheit (20) zu geben, dass die Dekodiereinheit (20) mit der Steuereinheit (70) verbunden und ausgebildet ist, einen als Teil der Zusatzinformationen übertragenen Aufzeichnungsauftrag zu empfangen und an die Steuereinheit (70) zu geben, und dass die Steuereinheit (70) ausgebildet ist, auf den Empfang des Aufzeichnungsauftrages anzusprechen und das Aufzeichnungsstartsignal zu erzeugen und an den Aufzeichnungsspeicher (30) zu geben und das Kanalauswahlsignal zu erzeugen und an den Empfänger (10) zu geben.

5. Vorrichtung (1) nach Anspruch 4, **dadurch gekennzeichnet, dass** die Steuereinheit (70) ausgebildet ist, allein von der Dekodiereinheit (20) einen Aufzeichnungsauftrag entgegenzunehmen.

6. Vorrichtung (1) nach Anspruch 2 und Anspruch 4, **dadurch gekennzeichnet, dass** die Steuereinheit (70) ausgebildet ist, einen Aufzeichnungsauftrag allein von der Dekodiereinheit (20) und der Schnittstelle (60) entgegenzunehmen.

7. Vorrichtung (1) nach einem der Ansprüche 1 bis 6, **gekennzeichnet durch** einen mit dem Bildsignalgenerator (40) verbundenen Bildschirm (3), der ausgebildet ist, das von dem Bildsignalgenerator (40) erzeugte Bildsignal darzustellen.

8. System umfassend eine Vorrichtung (1) nach einem der Ansprüche 1 bis 7 und einen mit der Vorrichtung (1) über ein Datennetz (4) verbundenen oder verbindbaren Aufzeichnungsauftragsserver,
**dadurch gekennzeichnet,**
**dass** der Aufzeichnungsauftragsserver ausgebildet ist, über das Datennetz (4) einen ersten Aufzeichnungsauftrag von der Vorrichtung (1) entgegenzunehmen und zu einem durch den ersten Aufzeichnungsauftrag bezeichneten Zeitpunkt einen zweiten Aufzeichnungsauftrag an die Vorrichtung (1) zu senden.

9. System nach Anspruch 8, **dadurch gekennzeichnet, dass** der Aufzeichnungsauftragsserver ausgebildet ist, den zweiten Aufzeichnungsauftrag über das Datennetz (4) an die Vorrichtung zu senden.

10. System nach Anspruch 8 oder 9, **dadurch gekennzeichnet, dass** der Aufzeichnungsauftragsserver ausgebildet ist, den zweiten Aufzeichnungsauftrag in ein Fernsehsignal einzuspeisen oder an ein Gateway für das Einspeisen in ein Fernsehsignal zu senden.
